# EUROPÄISCHE PATENTSCHRIFT

(11) **EP 4 165 295 B1**
(45) Veröffentlichungstag und Bekanntmachung des Hinweises auf die Patenterteilung: **01.01.2025**
(21) Anmeldenummer: 21732223.9
(22) Anmeldetag: 08.06.2021
(51) Int. Cl.: F03C 1/40, F03C 1/26, F04B 49/00, F16H 61/433

(54) **VERFAHREN ZUR ERMITTLUNG EINER REGELGRENZE EINES VENTILS, HYDROMASCHINE MIT DEM VENTIL UND HYDROSTATISCHER FAHRANTRIEB MIT DER HYDROMASCHINE**
METHOD FOR DETERMINING A CONTROL LIMIT OF A VALVE, HYDRAULIC MACHINE COMPRISING THE VALVE, AND HYDROSTATIC DRIVE COMPRISING THE HYDRAULIC MACHINE
PROCÉDÉ DE DÉTERMINATION D'UNE LIMITE DE COMMANDE D'UNE SOUPAPE, MACHINE HYDRAULIQUE COMPRENANT LA SOUPAPE ET ENTRAÎNEMENT HYDROSTATIQUE COMPRENANT LA MACHINE HYDRAULIQUE

(30) Priorität: 10.06.2020 DE 102020207282
(43) Veröffentlichungstag der Anmeldung: 19.04.2023
(73) Patentinhaber: Robert Bosch GmbH, 70442 Stuttgart (DE)
(72) Erfinder: MUTSCHLER, Steffen, 89233 Neu-Ulm (DE)
(86) Internationale Anmeldenummer: PCT/EP2021/065330
(87) Internationale Veröffentlichungsnummer: WO 2021/250020

(56) Entgegenhaltungen:
- EP-A1- 3 587 795
- DE-A1- 19 524 669
- US-A1- 2013 189 126

## Beschreibung

Die Erfindung betrifft ein Verfahren zur Ermittlung einer Regelgrenze eines Druckreduzierventils gemäß dem Oberbegriff des Patentanspruchs 1, sowie eine Hydromaschine gemäß Patentanspruch 8 und einen hydrostatischen Fahrantrieb gemäß Patentanspruch 10.

Ein hydrostatischer Fahrantrieb, beispielsweise für einen Radlader, hat eine Hydropumpe, die für das Fahren Druckmittel in eine Arbeitsleitung zu einem Hydromotor fördert. Der Druckmittelvolumenstrom hat in der Arbeitsleitung einen Arbeitsdruck oder Hochdruck zur Folge. Das Verdrängungsvolumen der Hydropumpe wird über einen doppeltwirkenden Hydrozylinder verstellt. Dessen in gegensinnige Verstellrichtungen wirksamen Kammern sind jeweils mit Stelldruck beaufschlagbar. Der Stelldruck wird pro Kammer über ein elektroproportionales Druckreduzierventil gemäß eines vom Fahrerwunsch abhängigen Ansteuerstroms geregelt. Die Ventile unterliegen einer Serienstreuung mit dem Effekt, dass ein Zusammenhang aus Ansteuerstrom und Stelldruck über die Ventilserie nicht reproduzierbar ist.

Auch gewinnt die modellbasierte Steuerung von Fahrantrieben zunehmend an Bedeutung, welche ein inverses Modell dieses Zusammenhangs benötigt. Damit diese Form der Steuerung eine nur geringe Abweichung zwischen Sollwert und Istwert erreichen kann, muss das verwendete inverse Modell des Ventils dem realen Ventil möglichst nahekommen.

Folglich muss die Charakteristik aus Ansteuerstrom und resultierendem Stelldruck für jedes Ventil der Serie mit einer individuellen Kalibrierung ermittelt werden, um anhand des Ergebnisses die im Modell vorgehaltenen Parameter des Ventils individuell anzupassen. Eine Sensorik zur Ermittlung des Stelldrucks ist aus Kostengründen nicht vorhanden, weshalb eine direkte Kalibrierung des Ventils bisher nicht möglich ist.

So ergeben sich für die Kalibrierung des Regelbeginns bei minimalem Ansteuerstrom und des maximalen Arbeitspunktes bei maximalem Ansteuerstrom besondere Schwierigkeiten. Der Regelbeginn des Ventils lässt sich bisher nicht ermitteln, da der Aktor mittenzentriert vorgespannt ist, sodass das Verdrängungsvolumen im Ruhezustand sicher null ist. Diese Vorspannung muss erst überwunden werden, um beispielsweise eine Reaktion des Hochdrucks, und damit ein Messsignal zu erhalten. Der insbesondere für den ruckfreien Fahrtrichtungswechsel benötigte, wichtige Bereich kleiner Ansteuerströme, ist somit im Stillstand nicht über den Hochdruck beobachtbar. Die Verwendung eines mittleren Schätzwertes hierfür führt bei wenigen Exemplaren aber zu ruckigen Fahrtrichtungswechseln. Die obere Regelgrenze wird ermittelt, indem die Pumpe bei Nennleistung des Fahrantriebes gegen die an ihr wirksamen, lastdruckabhängigen Rückschwenkkräfte auf 100% Schwenkwinkel ausschwenkt. Das Fahrzeug muss sich hierfür unter voller Belastung bei signifikanter Geschwindigkeit über eine Zeitspanne bewegen, beispielsweise auf einer Teststrecke, was den Kalibriervorgang sehr schwierig und aufwändig macht.

Ein herkömmliches Verfahren zur Kalibrierung, welches auf dem Fahrverhalten des Fahrzeugs basiert, zeigt die Druckschrift DE 195 246 69 A1. Wie oben dargelegt, wird hierbei jedoch nicht das Ventil alleine, sondern der gesamte Antriebsstrang kalibriert und der Bereich kleiner Ansteuerströme kann nicht abgeglichen werden.

Dem gegenüber liegt der Erfindung die Aufgabe zu Grunde, ein Verfahren zu schaffen, mit dem die Regelgrenzen eines Druckreduzierventils präziser ermittelbar sind. Eine weitere Aufgabe ist, eine Hydromaschine zu schaffen, die die Möglichkeit präziserer Kalibrierung ihrer Steuerventile ermöglicht. Eine dritte Aufgabe ist, einen hydrostatischen Fahrantrieb mit einer solchen Hydromaschine zu schaffen.

Die jeweilige Aufgabe wird gelöst durch ein Verfahren mit den Merkmalen des Patentanspruchs 1, eine Hydromaschine mit den Merkmalen des Anspruchs 8 und einen Fahrantrieb mit den Merkmalen des Anspruchs 10.

Vorteilhafte Weiterbildungen der Erfindungen sind in den abhängigen Patentansprüchen beschrieben.

Gemäß dem Verfahren wird wenigstens eine Regelgrenze eines elektrisch ansteuerbaren ersten Druckregelventils, insbesondere ersten Druckreduzierventils, in Abhängigkeit von dessen ersten Ansteuerstrom ermittelt oder kalibriert. Hierzu ist eine zumindest im Pumpenbetrieb betreibbare und angetriebene Hydromaschine vorgesehen, insbesondere eine Axialkolbenpumpe in Schrägscheibenbauweise, wobei ein Verdrängungsvolumen der Hydromaschine von einem in eine Verstellrichtung vorgespannten Aktor, insbesondere Hydrozylinder, mit einander entgegenwirkenden Druckflächen in unterschiedliche Verstellrichtungen verstellbar ist. Vorzugsweise wird die Hydromaschine während des Verfahrens mit konstanter Drehzahl angetrieben. Vorzugsweise ist sie reversierbar und kann somit dies- und jenseits eines Verdrängungsvolumens von Null verstellt werden. Die erste der Druckflächen ist vom ersten Druckregelventil - im Folgenden erstes Ventil genannt - in Abhängigkeit des an ihm wirksamen ersten Ansteuerstroms mit erstem Stelldruck beaufschlagbar. Der erste Ansteuerstrom entspricht in der Verwendung des ersten Ventils in einem Fahrantrieb beispielsweise einem Fahrerwunsch in einer ersten Fahrtrichtung. Zum Ermitteln der Regelgrenze des ersten Ventils wird der Hochdruck der Hydromaschine oder eine damit korrelierende Betriebsgröße der Hydromaschine erfasst. Erfindungsgemäß wird die zweite Druckfläche mit einem hinreichend großen, konstanten zweiten Stelldruck beaufschlagt. Hinreichend groß bedeutet insbesondere, dass der zweite Stelldruck einen Hochdruck in der korrespondierenden Richtung oder Arbeitsleitung zur Folge hat. Dann wird der erste Ansteuerstrom ausgehend von einer seiner Grenzen variiert. Eine erste Regelgrenze wird dann ermittelt, wenn eine erste messbare Änderung des vom zweiten Stelldruck verursachten Hochdrucks oder der Betriebsgröße erfasst wird. Insbesondere ist während des gesamten Vorgangs die Hydromaschine hydraulisch blockiert. Dies kann beispielsweise über die Haltebremse des Fahrantriebes oder dergleichen erfolgen.

Das Verfahren basiert somit auf einer Einspannung des Aktors zwischen den Stelldrücken. Auf diese Weise wird der Betriebspunkt des Aktors aus seiner Vorspannung heraus verschoben und ein bereits sehr kleiner erster Ansteuerstrom führt - anders als beim Stand der Technik - zu einer erfassbaren Reaktion des Hochdrucks oder der Betriebsgröße. Die Stelldrücke bilden dabei eine Differenz, die, solange die Regelgrenze nicht überschritten wird, konstant ist. Es wird also zunächst keine Änderung des Hochdrucks oder der Betriebsgröße erfasst, da es auch zu keiner Änderung der Kräfteverhältnisse am Aktor kommt. Mit der Variation des ersten Ansteuerstroms kommt es aber in Folge der Betriebspunktverschiebung sehr schnell zum Überschreiten der Regelgrenze des ersten Ventils, bei der der erste Ansteuerstrom einen Wert erreicht, der zu einer Änderung des ersten Stelldrucks und damit des Kräfteverhältnisses am Aktor führt. Die Folge ist die geringfügige Verstellung des Verdrängungsvolumens, was dann als Änderung des bis dahin konstanten Stellweges, Stellwinkels und/oder Hochdrucks erfassbar ist. Entweder ist diese Änderung ein Abfall oder ein Ansteigen, je nachdem von welcher Grenze ausgehend variiert wurde. Durch die erfindungsgemäße Einspannung kann diese Reaktion des Hochdrucks oder der Betriebsgröße bedeutend früher als bei herkömmlichen Verfahren erfasst werden, sodass Regelgrenzen, und damit die Kennlinie des Ventils, mit hoher Genauigkeit und trotzdem geringem Aufwand ermittelbar sind. Eine Ventilkennlinie des Ventils kann so ab Regelbeginn ohne Messung des Stellkammerdrucks ermittelt werden, was teure Sensorik hierfür überflüssig macht. Grundlegend wird über die erfindungsgemäße Kalibrierung die Qualität des Fahrtrichtungswechsels bei modellbasierter Steuerung verbessert.

In einer ersten Variante des Verfahrens ist das erste Ventil zu Beginn unbestromt und es erfolgt als Variation dann ein Anheben des Ansteuerstroms. Der bei erfasster Änderung des Hochdrucks oder der Betriebsgröße anliegende erste Ansteuerstrom ist als erste Regelgrenze dann die untere Regelgrenze.

In einer zweiten Variante des Verfahrens ist das erste Ventil zu Beginn voll bestromt und es erfolgt als Variation dann ein Absenken des ersten Ansteuerstroms. Der bei erfasster Änderung des Hochdrucks oder der Betriebsgröße anliegende erste Ansteuerstrom ist dann als erste Regelgrenze die obere Regelgrenze.

In einer Weiterbildung werden beide Regelgrenzen des ersten Ventils ermittelt. Vorzugsweise erfolgt dies mit einem Schritt "Ermitteln einer zweiten Regelgrenze, wenn im Wirksinn des ersten Stelldrucks eine letzte Änderung des Hochdrucks oder der Betriebsgröße erfasst wird". Vorzugsweise erfolgt dieser Schritt bei dem bereits erwähnten konstanten zweiten Stelldruck und bei fortlaufender Variation des ersten Ansteuerstroms, also weiter absenkend oder weiter ansteigend, je nach Variante. Als letzte Änderung ist zu verstehen, dass im Anschluss an sie der erfasste Hochdruck oder die erfasste Betriebsgröße im weiteren Verlauf, selbst bei noch variierendem ersten Ansteuerstrom, konstant bleibt. Eine Änderung dieses Stroms führt also zu keiner Änderung mehr im Ventilverhalten, was gleichbedeutend damit ist, dass die zweite Regelgrenze überschritten wurde.

In einem weiteren Schritt erfolgt die Speicherung der jeweils ermittelten Regelgrenze.

In einer Weiterbildung ist die mit dem Hochdruck korrelierende Betriebsgröße, abgesehen vom Verdrängungsvolumen selbst, ein Verstellweg oder Verstellwinkel des Aktors oder der Hydromaschine.

Alternativ zur Verwendung eines konstanten Hochdrucks, von beispielsweise 200 bar, als erfasste Betriebsgröße der Hydromaschine und des Verfahrens kann ein Schwenkwinkelsignal oder Verstellwegsignal verwendet werden.

Das ist insbesondere bei Antrieb des Hydromotors gegen einen hohen Widerstand, mit oder ohne Fahrzeugbewegung möglich. Dabei ist ein ruhendes Fahrzeug vorteilhafter, da eine Bewertung von Störungen aus der Umwelt bei Bewegung nicht oder kaum gelingt. Generell ist eine Bewegung aber auch vertretbar, weil weder Nennvolumenstrom noch Nennleistung nötig sind und es würde sich somit um eine langsame Bewegung mit geringer Leistung handelt.

In der Weiterbildung mit Schwenkwinkel als erfasster Betriebsgröße und ruhendem Fahrzeug ist der Hochdruck bevorzugt derart hoch, dass die Leckage der Hydromaschine dazu führt, dass trotz ruhendem Fahrzeug der Schwenkwinkel zumindest zwischen 10 und 15% beträgt. Der Hochdruck hierbei ist größer gleich etwa 300bar. Insbesondere ist der Hochdruck derart hoch, dass eine Hysterese der Erfassung des Schwenkwinkels vernachlässigbar wird.

Hierzu ist vorzugsweise ein Weg- oder Winkelsensor vorgesehen, dessen erfasster Wert mit einem Schritt "Erfassen des Stellweges oder Stellwinkels" ins Verfahren eingeht. Entsprechendes gilt für den Hochdruck, sodass die Hydromaschine vorzugsweise einen Drucksensor für einen Verfahrensschritt "Erfassen des Hochdrucks auf der Hochdruckseite" hat.

Wird die Hydromaschine in einer Weiterbildung mit konstanter Drehzahl angetrieben, erleichtert das die Ermittlung der Regelgrenzen.

Der hinreichend konstante, zweite Stelldruck kann in einer Weiterbildung von einer Konstantdruckquelle, insbesondere einem Hydrospeicher bereitgestellt werden.

In einer bevorzugten Weiterbildung des Verfahrens wird die andere, zweite Druckfläche von einem zweiten Druckreduzierventil mit einem zweiten Stelldruck beaufschlagt. Diese Anordnung entspricht der bevorzugten Ausführungsform der Hydromaschine, bei der jeder Verstellrichtung (Fahrtrichtung) ein Druckreduzierventil zugeordnet ist. Über das Verfahren werden die Regelgrenzen beider Druckreduzierventile ermittelt, indem das jeweils zu kalibrierende Druckreduzierventil variabel und das jeweils andere konstant bestromt wird.

Eine erfindungsgemäße Hydromaschine hat ein Verstellsystem, das über vorgespannte Federn mittenzentriert ist und mittels eines beidseitig wirkenden Aktors mit einander entgegenwirkenden Druckflächen verstellbar ist. Von diesen ist eine erste von einem ersten Druckregelventil der Hydromaschine in Abhängigkeit eines ersten Ansteuerstroms mit einem ersten Stelldruck und eine zweite von einem zweiten Druckregelventil der Hydromaschine in Abhängigkeit eines zweiten Ansteuerstroms mit einem zweiten Stelldruck beaufschlagbar. Dabei ist eine Erfassungseinrichtung zur Erfassung eines Hochdrucks, insbesondere in wenigstens einer Arbeitsleitung, oder einer damit korrelierenden Betriebsgröße der Hydromaschine vorgesehen. Erfindungsgemäß ist eine Steuereinrichtung vorgesehen, von der die Druckregelventile ansteuerbar sind und in der ein Verfahren gemäß wenigstens einem Aspekt der vorhergehenden Beschreibung zur Ausführung gespeichert ist.

Vorzugsweise ist der Hydromaschine ein Mittel zugeordnet, mittels dem sie hydraulisch blockierbar ist, von ihr also trotz drehender Triebwelle kein Druckmittelvolumenstrom abströmen kann. Dies kann beispielsweise eine Blindleitung oder absperrbare Arbeitsleitung auf ihrer Hochdruckseite oder ein fluidisch verbundener Hydromotor sein, dessen Verdrängungsvolumen von der Steuereinrichtung auf null stellbar ist oder der mittels einer Bremse mechanisch blockierbar ist.

Die Hydromaschine ist vorzugsweise derart ausgestaltet, dass der Hochdruck in Richtung seiner eigenen Verringerung auf die Verstellung des Verdrängungsvolumens einwirkt. Dies ist konstruktiv insbesondere durch eine Verdrillung einer Steuerscheibe der Hydromaschine aus einer Mittelstellung heraus umgesetzt. Die Verdrillung bewirkt, dass eine auf den Verstellmechanismus der Hydromaschine wirkende resultierende Druckkraft hydrostatischen Arbeitsräume der Hydromaschine ungleich null ist, und so zu einer Verstellkraft oder einem Verstellmoment in genannter Richtung, unabhängig von der Aktorkraft, führt.

Ein hydrostatischer Fahrantrieb hat eine erste Hydromaschine, die gemäß wenigstens einem Aspekt der vorangegangenen Beschreibung ausgeführt ist, und eine von dieser mit Druckmittel versorgbare, zweite Hydromaschine, die als Hydromotor betreibbar und mit einem Abtrieb des Fahrantriebes koppelbar, insbesondere gekoppelt ist.

Im Folgenden wird je ein Ausführungsbeispiel eines erfindungsgemäßen Verfahrens, und einer erfindungsgemäßen Hydromaschine für einen hydrostatischen Fahrantrieb anhand von Zeichnungen näher erläutert. Es zeigen:
Figur 1 eine erfindungsgemäße Hydromaschine für einen hydrostatischen Fahrantrieb gemäß einem Ausführungsbeispiel,
Figur 2 einen Wirkzusammenhang einer Steuereinrichtung der Hydromaschine gemäß

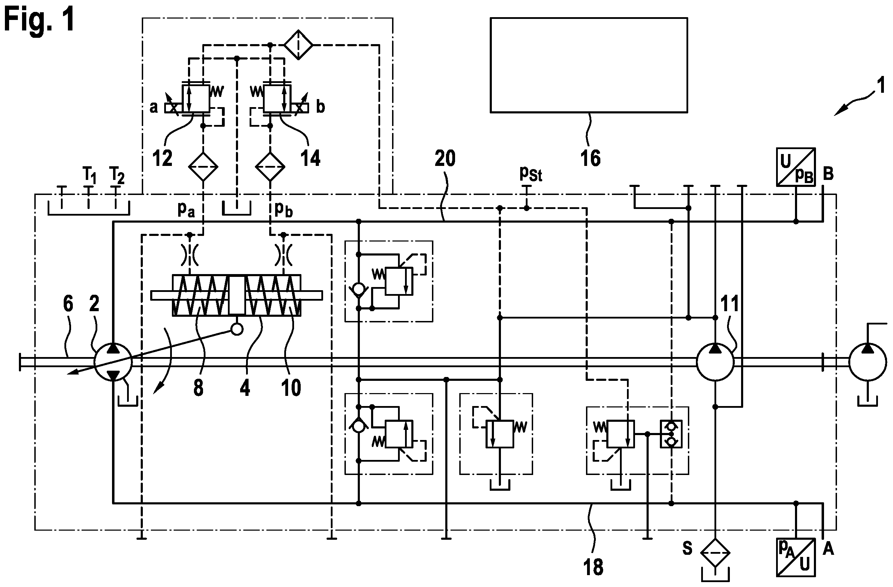

Figur 1, und

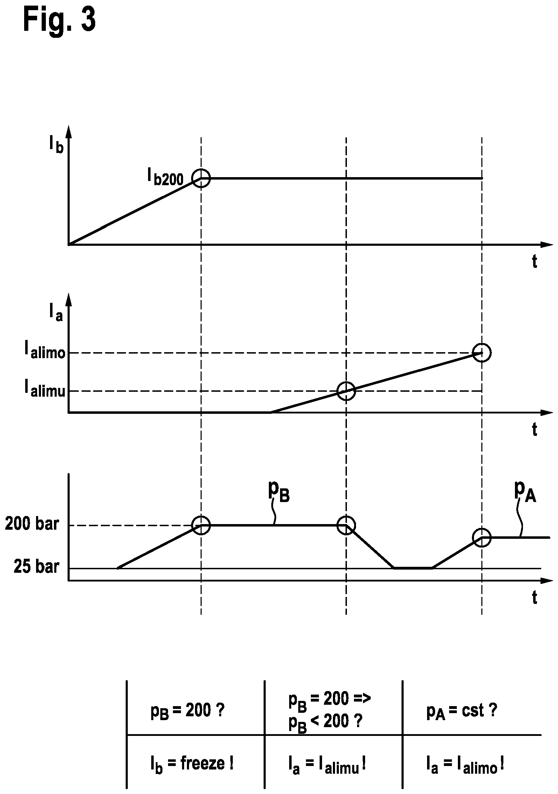

Figur 3 Zeitdiagramme eines erfindungsgemäßen Verfahrens gemäß einem Ausführungsbeispiel.

Gemäß Figur 1 hat eine als Hydropumpe betreibbare Hydromaschine 1 ein verstellbares Verdrängungsvolumen. Im Ausführungsbeispiel ist die Hydromaschine 1 als Axialkolbenpumpe in Schrägscheibenbauweise mit verstellbarer Schrägscheibe ausgestaltet. Die Hydromaschine 1 hat ein Triebwerk 2 und zur Verstellung ihres Verdrängungsvolumens einen Stellzylinder 4 als Aktor. Dieser ist mit der Schrägscheibe gekoppelt, bzw. lenkt diese an. Über eine Triebwelle 6 ist das Triebwerk 2 mit einer Antriebsmaschine, insbesondere mit einer Diesel- oder Elektromaschine (nicht dargestellt), gekoppelt und wird insbesondere mit konstanter Drehzahl angetrieben.

Zur Betätigung des Stellzylinders 4 und damit zur Verstellung des Verdrängungsvolumens hat die Hydromaschine 1 für jede der Kammern 8, 10 des Stellzylinders ein als Druckreduzierventil ausgestaltetes Druckregelventil 12, 14, welches gemäß einem Fahrerwunsch ein mit dem Druck pst zur Verfügung gestelltes Druckmittel auf einen jeweiligen Stelldruck pₐ, p_{b} in dem Kammern 8, 10 regeln kann. Das genannte Druckmittel wird dabei von einer Hilfspumpe 11 bereitgestellt, die mit der Triebwelle 6 angetrieben wird.

Die Hydromaschine 2 ist reversierbar ausgestaltet und hat zwei Arbeitsleitungen 18 und 20, in die sie fördern kann. An diese kann ein Hydromotor fluidisch angebunden sein, der mit einem Rad oder einer Achse gekoppelt ist, sodass ein hydrostatischer Fahrantrieb gebildet ist.

Zur Verarbeitung des genannten Fahrerwunsches hin zur Ansteuerung der Druckreduzierventile 12, 14, genauer gesagt von deren Elektromagneten a, b, mit einem jeweiligen Ansteuerstrom Iₐ, I_{b}, hat die Hydromaschine 1 eine Steuereinrichtung 16. In dieser ist das nachfolgend beschriebene Verfahren zur Kalibrierung der Druckreduzierventile 12, 14 zur Ausführung abgelegt.

Auf die Beschreibung weiterer Details der Hydromaschine 1 kann zu Gunsten der Kürze der Schrift verzichtet werden, da eine solche aus dem Stand der Technik bekannt ist. Insbesondere handelt es sich dabei um eine sogenannte ET-gesteuerte Hydromaschine 1 der Anmelderin. Die weitere Beschreibung fokussiert auf das in der Steuereinrichtung 16 abgelegte und ausführbare Verfahren.

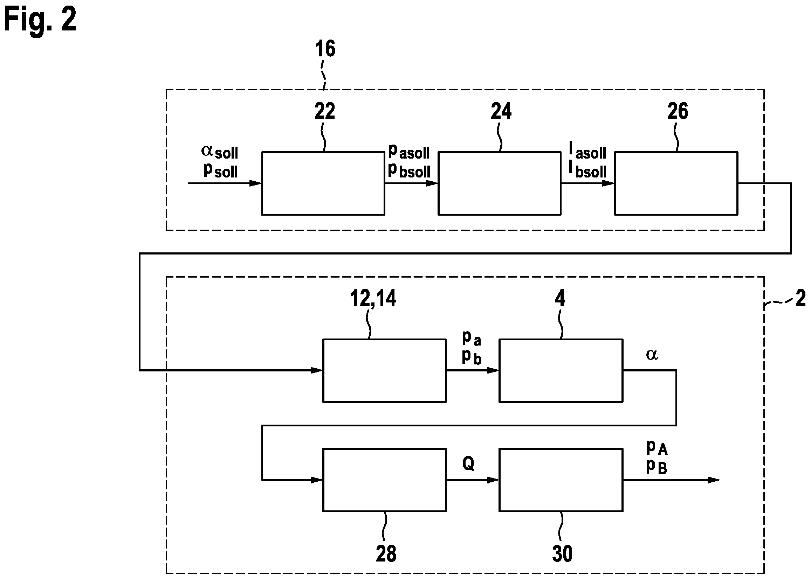

Diesem liegt ein möglicher Wirkzusammenhang zugrunde, der zunächst anhand Figur 2 beschrieben wird. Demgemäß ist ein in die Steuereinrichtung 16 eingehender Fahrerwunsch bis hin zum resultierenden und erfassbaren Hochdruck dargestellt. Zunächst ergeht an die Steuereinrichtung 16 der Fahrerwunsch im Sinne eines Soll-Schwenkwinkels αₛₒₗₗ oder eines Solldrucks pₛₒₗₗ, beziehungsweise je nach gewünschter Fahrtrichtung p_{Asoll} oder p_{Bsoll}, der Hydromaschine 1. Dieser Fahrerwunsch wird von einem in der Steuereinrichtung 16 abgelegten inversen Modell 22 in einen Sollwert des Stelldrucks pₐₛₒₗₗ oder p_{bsoll} umgerechnet. Dieser geht ins inverse Modell 24 des Druckreduzierventils 12 oder 14 ein, über das der diesem entsprechende Ansteuerstrom Iₐₛₒₗₗ oder I_{bsoll} berechnet wird. Ein Stromregler 26 beaufschlagt den Magneten a oder b des Druckreduzierventils 12 oder 14 damit, woraus, je nach Güte des Modells 24 des Druckreduzierventils 12 ,14 der tatsächlich wirksame Stelldruck pₐ oder p_{b} resultiert. Dieser wirkt in der betreffenden Kammer 8 oder 10 des Stellzylinders 4, woraus ein realer und erfassbarer Schwenkwinkel α resultiert. Über das Pumpentriebwerk der Hydromaschine 2 wird dann bei gegebener Drehzahl n der Triebwelle 6 ein Druckmittelvolumenstrom Q bereitgestellt, welcher bei gegebenem Volumen 30 in einem Druck p_{A} oder p_{B} resultiert.

Figur 3 zeigt Strom-Zeit-Diagramme und ein Druck-Zeit-Diagramme eines Ausführungsbeispiels eines Verfahrens zur Ermittlung der unteren und oberen Regelgrenze der Druckreduzierventile 12, 14, wobei diese Punkte jeweils eine Kennlinie des betreffenden Ventils 12, 14 darstellen. Hieraus kann das jeweilige inverse Modell 24 der Ventile 12, 14 gemäß Figur 2 ermittelt werden.

Zunächst wird hierzu die Hydromaschine 1 hydraulisch blockiert, so dass kein Volumenstrom Q abfließen kann. Eine untere Regelgrenze oder der untere Regelbeginn des Ventils 12 ist der Punkt, an dem der Strom Iₐ ausreicht, einen Relativdruck in der Kammer 8 gemäß Figur größer-gleich 0 bar einzuregeln. Wegen der Federvorspannung am Stellkolben reagiert die Hydromaschine 1 jedoch erst ab einem Stelldruck pₐ von etwa 5 bar mit einem sensorisch erfassten Hochdruckaufbau vom Hochdruck p_{A}. Somit ist ein kleinerer Stelldruck als 5 bar auf herkömmliche Weise nicht direkt detektierbar.

Die vorgeschlagene erfindungsgemäße Kalibrierung erfolgt daher mit einer Kräftekompensation am Stellkolben des Stellzylinders 4. Am Ventil 8 soll der Regelbeginn ermittelt werden. Gemäß Figur 3 wird hierzu der Elektromagnet b des Ventils 10 über die Steuereinrichtung mit einem zweiten Ansteuerstrom I_{b} bestromt, bis sich bei der Drehzahl n ein Hochdruck oder Arbeitsdruck p_{B} in der Leitung 20 von beispielsweise 200 bar einstellt. Dieser Arbeitsdruck p_{B} wird über einen Drucksensor erfasst. Dazu stellt sich in der Kammer 10 der Stelldruck p_{b} ein.

Dann wird der Elektromagnet a des Druckreduzierventils 12 mit einem langsam steigenden ersten Ansteuerstrom Strom beaufschlagt. Dabei ist sichergestellt, dass der minimale Strom Iₐ, mit dem begonnen wird, sicher unterhalb des unteren Regelbeginns/der unteren Regelgrenze Iₐₗᵢₘᵤ des Ventils 12 liegt.

Sobald der erste Ansteuerstrom Iₐ groß genug ist, dass ein erster Stelldruck pₐ > 0bar in der Kammer 8 aufgebaut wird, kompensiert dieser erste Stelldruck pₐ in Kammer A teilweise die Wirkung der Kraft des zweiten Stelldrucks p_{b} in der zweiten Kammer 10. Die Hydropumpe 2 schwenkt dann leicht zurück und der Hochdruck p_{B} fällt auf einen Wert < 200bar. Diese Änderung wird überwacht und erfasst und der zugeordnete erste Ansteuerstrom wird als unterer Regelbeginn oder untere Regelgrenze Iₐₗᵢₘ, für das erste Druckreduzierventil 12 in der Steuereinrichtung 16 gespeichert. Für das zweite Druckreduzierventil 14 wird äquivalent vorgegangen.

Für die Ermittlung der oberen Regelgrenze oder des Regelendes des ersten Druckreduzierventils 12 wird ebenfalls eine Kraftkompensation verwendet.

Dabei wird das zweite Druckreduzierventil 14 weiterhin so bestromt, dass der Hochdruck p_{B} in der Leitung 20 200bar beträgt. Der zweite Ansteuerstrom I_{b} ist daher weiterhin eingefroren.

Der Anstieg des ersten Ansteuerstroms I_{A} wird nun weiter fortgesetzt. Da die Kammer 8 nun einen ansteigenden ersten Stelldruck pₐ aufweist, wirkt der Stellzylinder 4 auf das Verdrängungsvolumen zunehmend verkleinernd. In Folge fällt der Hochdruck p_{B} in der Leitung 20 bis auf 0 bar ab. Überwiegt der erste Stelldruck pₐ der Kammer 8 den zweiten Stelldruck der Kammer 10, so beginnt der Druck p_{A} in der Leitung 18 zu steigen.

In dem Moment, in dem der Hochdruck p_{A} der Leitung 18 nicht mehr weiter ansteigt, also als konstant erfasst wird, bedeutet das, dass das erste Druckreduzierventil 12 voll geöffnet ist, die letzte oder obere Regelgrenze Iₐₗᵢₘₒ also überschritten wurde, sodass in der Kammer 8 Versorgungsdruck p_{St} anliegt.

Der jeweilige obere Ansteuerstrom Iₐₗᵢₘₒ, I_{blimo} charakterisiert das Regelende des betreffenden Ventils 12, 14, bezogen auf den verfügbaren Versorgungsdruck oder Stelldruck pst.

Der maximal verfügbare Versorgungsdruck oder Stelldruck pst entspricht vorzugsweise bei unbestromtem ersten und/oder zweiten Druckreduzierventil 12, 14 dem Hochdruck p, und ist insbesondere über Hochdrucksensoren erfassbar.

Offenbart ist ein Verfahren zur Kalibrierung eines Druckreduzierventils einer Hydromaschine, wobei das Ventil auf eine von zwei einander entgegenwirkenden Kammern eines Stellzylinders der Hydromaschine mit einem Stelldruck wirkt und die andere Kammer zum Kalibrieren mit einem Konstantdruck beaufschlagt wird. Der Stellzylinder ist dabei in einer Grundstellung vorgespannt. Die Ermittlung wenigstens einer Regelgrenze des Druckreduzierventils erfolgt unter Kompensation dieser Vorspannung, indem der Ansteuerstrom des Druckreduzierventils ausgehend von einer Grenze außerhalb seines Regelbereichs hin zum Regelbereich verstellt wird und sobald sich eine mit der Verstellung korrelierende, erfasste Betriebsgröße ändert, der dann anstehende Ansteuerstrom als Regelgrenze gespeichert wird.

Offenbart sind weiterhin eine Hydromaschine mit einem derartigen Druckreduzierventil und einer Steuereinrichtung mit dem darin zur Ausführung gespeicherten Verfahren, sowie ein hydrostatischer Fahrantrieb mit dieser Hydromaschine und mit einem davon antreibbaren Hydromotor.

### Bezugszeichenliste:

1 Hydromaschine
2 Triebwerk
   4 Stellzylinder
6 Triebwelle
8 erste Kammer
10 zweite Kammer
12 erstes Druckreduzierventil
14 zweites Druckreduzierventil
16 Steuereinrichtung
18 erste Arbeitsleitung
20 zweite Arbeitsleitung
22 inverses Modell Hydromaschine
24 inverses Modell Druckreduzierventil
26 Stromregler
28 Pumpentriebwerk
30 Volumen
Iₐ, Iₐₛₒₗₗ erster Ansteuerstrom, Sollwert
I_{b}, I_{bsoll} zweiter Ansteuerstrom, Sollwert
Iₐₗᵢₘᵤ, I_{blimu} untere Regelgrenze
Iₐₗᵢₘₒ, I_{blimo} obere Regelgrenze
pₐ, pₐₛₒₗₗ erster Stelldruck, Sollwert
p_{b}, p_{bsoll} zweiter Stelldruck, Sollwert
α, αₛₒₗₗ Stellwinkel, Sollwert
p, pₛₒₗₗ Hochdruck, Sollwert
p_{A}, p_{Asoll} Hochdruck Seite A, Sollwert
p_{B}, p_{Bsoll} Hochdruck Seite B, Sollwert
Q Druckmittelvolumenstrom
T Tank
t Zeit

## Patentansprüche

1. Verfahren zum Ermitteln wenigstens einer Regelgrenze (Iₐₗᵢₘᵤ, Iₐₗᵢₘₒ) eines elektrisch ansteuerbaren ersten Druckregelventils (12) in Abhängigkeit von einem ersten Ansteuerstrom (Iₐ), wozu eine angetriebene Hydromaschine (1) vorgesehen ist, deren Verdrängungsvolumen von einem mittenzentriert vorgespannten Aktor (4) mit einander entgegenwirkenden Druckflächen verstellbar ist, von denen eine erste vom ersten Druckregelventil (12) in Abhängigkeit des ersten Ansteuerstroms (Iₐ) mit erstem Stelldruck (pₐ) beaufschlagbar ist, wobei der Hochdruck (p_{A}, p_{B}) oder eine damit korrelierende Betriebsgröße der Hydromaschine (1) erfasst wird, **dadurch gekennzeichnet, dass** die zweite Druckfläche mit einem hinreichend großen, konstanten zweiten Stelldruck (p_{B}) beaufschlagt wird, so dass der zweite Stelldruck (p_{B}) einen Hochdruck in der korrespondierenden Richtung oder Arbeitsleitung zur Folge hat, während der erste Ansteuerstrom (la) ausgehend von außerhalb seiner Regelgrenzen (Iₐₗᵢₘᵤ, Iₐₗᵢₘₒ) hin zu einem Regelintervall variiert wird und eine erste Regelgrenze (Iₐₗᵢₘᵤ, Iₐₗᵢₘₒ) ermittelt wird, wenn eine erste Änderung des Hochdrucks (p_{B}) oder der Betriebsgröße erfasst wird.

2. Verfahren nach Anspruch 1, wobei das erste Druckreduzierventil (12) zu Beginn unbestromt ist und dann ein Anheben des ersten Ansteuerstroms (Iₐ) erfolgt, oder wobei das erste Druckreduzierventil (12) zu Beginn maximal bestromt ist und dann ein Absenken des ersten Ansteuerstroms (Iₐ) erfolgt.

3. Verfahren nach einem der Ansprüche 1 oder 2 mit einem Schritt "Ermitteln einer zweiten Regelgrenze (Iₐₗᵢₘₒ), wenn im Wirksinn des Stelldrucks (pₐ) eine letzte Änderung des Hochdrucks (p_{B}) oder der Betriebsgröße erfasst wird".

4. Verfahren nach einem der vorhergehenden Ansprüche, wobei die Betriebsgröße ein Verstellweg oder Verstellwinkel (α) des Aktors oder der Hydromaschine (1) ist.

5. Verfahren nach einem der vorhergehenden Ansprüche, wobei die Hydromaschine mit konstanter Drehzahl (n) angetrieben wird.

6. Verfahren nach einem der vorhergehenden Ansprüche, das für verschiedene Drehzahlen (n) und/oder Hochdrücke (p_{A}, p_{B}) ausgeführt wird.

7. Verfahren nach einem der vorhergehenden Ansprüche, wobei beide Druckflächen von je einem Druckreduzierventil (12, 14) mit jeweiligem Stelldruck (pₐ, p_{b}) beaufschlagbar sind und die wenigstens eine Regelgrenze (Iₐₗᵢₘᵤ, Iₐₗᵢₘₒ, I_{blimu}, I_{blimo}) für beide Druckreduzierventile (12, 14) ermittelt wird, wobei zur Ermittlung das eine der beiden Druckreduzierventile (14, 12) konstant und das jeweils andere (12, 14) variabel bestromt wird.

8. Hydromaschine, deren Verdrängungsvolumen in beide Verstellrichtungen mittenzentriert vorgespannt ist und das über einen Aktor (4) mit einander entgegenwirkenden Druckflächen in unterschiedliche Verstellrichtungen verstellbar ist, wobei eine erste der Druckflächen von einem ersten Druckreduzierventil (12) in Abhängigkeit eines ersten Ansteuerstroms (Iₐ) mit einem ersten Stelldruck (pₐ) und eine zweite der Druckflächen von einem zweiten Druckreduzierventil (14) in Abhängigkeit eines zweiten Ansteuerstroms (I_{b}) mit einem zweiten Stelldruck (p_{b}) beaufschlagbar ist, und mit einer Erfassungseinrichtung zur Erfassung eines Hochdrucks (p_{A}, p_{B}) oder einer damit korrelierenden Betriebsgröße der Hydromaschine, **gekennzeichnet durch** eine Steuereinrichtung (16), in der ein Verfahren gemäß einem der vorhergehenden Ansprüche zur Ausführung abgelegt ist.

9. Hydromaschine nach Anspruch 8, die derart ausgestaltet ist, dass der Hochdruck (p_{A}, p_{B}) in Richtung seiner Verringerung auf die Verstellung des Verdrängungsvolumens wirksam ist.

10. Hydrostatischer Fahrantrieb mit einer ersten Hydromaschine (1) gemäß Anspruch 8 oder 9 und mit einer von dieser mit Druckmittel versorgbaren zweiten Hydromaschine, die als Hydromotor betreibbar und mit einem Abtrieb des Fahrantriebes koppelbar ist.

## Claims

1. Method for determining at least one control limit (Iₐₗᵢₘᵤ, Iₐₗᵢₘₒ) of an electrically actuable first pressure control valve (12) depending on a first actuating current (Iₐ), for which purpose a driven hydraulic machine (1) is provided, the displacement volume of which can be adjusted by an actuator (4) biased in a centred manner and having mutually counteracting pressure surfaces, a first control pressure (pₐ) being able to be applied to the first of the pressure surfaces by the first pressure control valve (12) depending on the first actuating current (Iₐ), wherein the high pressure (p_{A}, p_{B}) or a correlating operating variable of the hydraulic machine (1) is detected, **characterized in that** a sufficiently large, constant second control pressure (p_{B}) is applied to the second pressure surface, so that the second control pressure (p_{B}) results in a high pressure in the corresponding direction or working line, while the first actuating current (Ia) is varied starting from outside its control limits (Iₐₗᵢₘᵤ, Iₐₗᵢₘₒ) up to a control interval and a first control limit (Iₐₗᵢₘᵤ, Iₐₗᵢₘₒ) is determined when a first change in the high pressure (p_{B}) or the operating variable is detected.

2. Method according to Claim 1, wherein the first pressure-reducing valve (12) is initially unenergized and the first actuating current (Iₐ) is then raised, or wherein the first pressure-reducing valve (12) is initially energized to the maximum level and the first actuating current (Iₐ) is then lowered.

3. Method according to either of Claims 1 and 2 comprising a step "determining a second control limit (Iₐₗᵢₘₒ) when, in the sense of action of the control pressure (pₐ), a last change in the high pressure (p_{B}) or the operating variable is detected".

4. Method according to any of the preceding claims, wherein the operating variable is an adjustment distance or adjustment angle (α) of the actuator or the hydraulic machine (1).

5. Method according to any of the preceding claims, wherein the hydraulic machine is driven at a constant speed (n).

6. Method according to any of the preceding claims, which is executed for different speeds (n) and/or high pressures (p_{A}, p_{B}).

7. Method according to any of the preceding claims, wherein a respective control pressure (pₐ, p_{b}) can be applied to both pressure surfaces by a respective pressure-reducing valve (12, 14) and the at least one control limit (I_{alimu,} I_{alimo,} I_{blimu}, I_{blimo}) is determined for both pressure-reducing valves (12, 14), wherein, for determination purposes, one of the two pressure-reducing valves (14, 12) is constantly energized and the respectively other pressure-reducing valve (12, 14) is variably energized.

8. Hydraulic machine, the displacement volume of which is biased in a centred manner in both adjustment directions and which can be adjusted in different adjustment directions by means of an actuator (4) having mutually counteracting pressure surfaces, wherein a first control pressure (pₐ) can be applied to a first of the pressure surfaces by a first pressure-reducing valve (12) depending on a first actuating current (Iₐ) and a second control pressure (p_{b}) can be applied to a second of the pressure surfaces by a second pressure-reducing valve (14) depending on a second actuating current (I_{b}), and having a detection device for detecting a high pressure (p_{A}, p_{B}) or a correlating operating variable of the hydraulic machine, **characterized by** a control device (16), in which a method according to any of the preceding claims for execution is stored.

9. Hydraulic machine according to Claim 8, which is configured in such a way that the high pressure (p_{A}, p_{B}) has an effect, in the direction of its reduction, on the adjustment of the displacement volume.

10. Hydrostatic traction drive comprising a first hydraulic machine (1) according to Claim 8 or 9 and comprising a second hydraulic machine which can be supplied with pressure medium by the first hydraulic machine, can be operated as a hydraulic motor and can be coupled to an output of the traction drive.

## Revendications

1. Procédé permettant de déterminer au moins une limite de régulation (Iₐₗᵢₘᵤ, Iₐ₋ₗᵢₘₒ) d'une première soupape de régulation de pression (12) à commande électrique en fonction d'un premier courant de pilotage (Iₐ), une machine hydraulique (1) étant prévue à cet effet dont le volume de refoulement est réglable par un actionneur (4) précontraint de manière centrée, avec des surfaces de pression mutuellement antagonistes dont une première peut être sollicitée par une première pression de réglage (pₐ) à l'aide de la première soupape de régulation de pression (12) en fonction du premier courant de pilotage (Iₐ), dans lequel la haute pression (p_{A}, p_{B}) ou une grandeur de fonctionnement de la machine hydraulique (1) en corrélation avec celle-ci est détectée, **caractérisé en ce que** la deuxième surface de pression est sollicitée par une deuxième pression de réglage (p_{B}) constante, suffisamment élevée, de sorte que la deuxième pression de réglage (p_{B}) entraîne une haute pression dans la direction ou la conduite de travail correspondante pendant que le premier courant de pilotage (la) est amené à varier en partant de l'extérieur de ses limites de régulation (Iₐₗᵢₘᵤ, Iₐₗᵢₘₒ) vers un intervalle de régulation, et une première limite de régulation (Iₐₗᵢₘᵤ, Iₐₗᵢₘₒ) est déterminée lorsqu'un premier changement de la haute pression (p_{B}) ou de la grandeur de fonctionnement est détecté.

2. Procédé selon la revendication 1, dans lequel la première soupape de réduction de pression (12) est au départ non alimentée, et ensuite le premier courant de pilotage (Iₐ) est relevé, ou dans lequel la première soupape de réduction de pression (12) est au départ alimentée au maximum et ensuite le premier courant de pilotage (Iₐ) est abaissé.

3. Procédé selon l'une quelconque des revendications 1 ou 2, comprenant une étape consistant à « déterminer une deuxième limite de régulation (Iₐₗᵢₘₒ) si un dernier changement de la haute pression (pₐ) ou de la grandeur de fonctionnement est détecté dans le sens d'action de la pression de réglage (p_{B}) ».

4. Procédé selon l'une quelconque des revendications précédentes, dans lequel la grandeur de fonctionnement est un trajet de réglage ou un angle de réglage (a) de l'actionneur ou de la machine hydraulique (1).

5. Procédé selon l'une quelconque des revendications précédentes, dans lequel la machine hydraulique est entraînée à une vitesse de rotation (n) constante.

6. Procédé selon l'une quelconque des revendications précédentes, qui est exécuté pour différentes vitesses de rotation (n) et/ou hautes pressions (p_{A}, P_{B}).

7. Procédé selon l'une quelconque des revendications précédentes, dans lequel les deux surfaces de pression d'une soupape de réduction de pression (12, 14) respectivement peuvent être sollicitées par une pression de réglage (pₐ, p_{b}) respective, et ladite au moins une limite de régulation (Iₐₗᵢₘᵤ, Iₐₗᵢₘₒ, I_{blimu}, I_{bli-mo}) est déterminée pour les deux soupapes de réduction de pression (12, 14), dans lequel l'une des deux soupapes de réduction de pression (14, 12) est alimentée de manière constante et l'autre (12, 14) respectivement est alimentée de manière variable pour la détermination.

8. Machine hydraulique dont le volume de refoulement est précontraint de manière centrée dans les deux directions de réglage et est réglable dans différentes directions de réglage par l'intermédiaire d'un actionneur (4) avec des surfaces de pression mutuellement antagonistes, dans laquelle une première des surfaces de pression peut être sollicitée par une première pression de réglage (pₐ) à l'aide d'une première soupape de réduction de pression (12) en fonction d'un premier courant de pilotage (Iₐ), et une deuxième des surfaces de pression peut être sollicitée par une deuxième pression de réglage (p_{b}) à l'aide d'une deuxième soupape de réduction de pression (14) en fonction d'un deuxième courant de pilotage (I_{b}), et comprenant un dispositif de détection pour détecter une haute pression (pₐ, p_{B}) ou une grandeur de fonctionnement de la machine hydraulique en corrélation avec celle-ci, **caractérisée par** un dispositif de commande (16) dans lequel est mémorisé un procédé selon l'une quelconque des revendications précédentes.

9. Machine hydraulique selon la revendication 8 qui est configurée de telle sorte que la haute pression (p_{A}, p_{B}) agit en direction de sa diminution sur le réglage du volume de refoulement.

10. Mécanisme d'entraînement hydrostatique, comprenant une première machine hydraulique (1) selon la revendication 8 ou 9, et une deuxième machine hydraulique pouvant être alimentée en fluide sous pression par celle-ci et qui peut fonctionner en tant que moteur hydraulique et peut être couplée à une sortie du mécanisme d'entraînement.
